# EUROPÄISCHE PATENTSCHRIFT

(11) **EP 3 427 904 B1**
(45) Veröffentlichungstag und Bekanntmachung des Hinweises auf die Patenterteilung: **10.06.2020**
(21) Anmeldenummer: 17181206.8
(22) Anmeldetag: 13.07.2017
(51) Int. Cl.: B25J 9/16

(54) **ANORDNUNG MIT EINEM MANIPULATOR UND EINER BEGRENZUNGSEINRICHTUNG ZUR BEGRENZUNG DES ARBEITSBEREICHS**
ASSEMBLY WITH A MANIPULATOR AND A LIMITING DEVICE FOR LIMITING THE WORKING SPACE
SYSTÈME COMPRENANT UN MANIPULATEUR ET UN DISPOSITIF DE LIMITATION D'UN ESPACE DE TRAVAIL

(43) Veröffentlichungstag der Anmeldung: 16.01.2019
(73) Patentinhaber: Siemens Aktiengesellschaft, 80333 München (DE)
(72) Erfinder: Schwarz, Andreas, 90562 Kalchreuth (DE)

(56) Entgegenhaltungen:
- DE-A1-102006 044 071
- DE-A1-102007 037 078
- DE-B3-102015 009 048

## Beschreibung

Die Erfindung betrifft eine Anordnung, mit einem Bewegungsautomaten, welcher zumindest ein bewegbares Element umfasst, mit einer Begrenzungseinrichtung zum Begrenzen eines Arbeitsbereichs des Bewegungsautomaten, wobei die Begrenzungseinrichtung wenigstens ein Begrenzungselement umfasst, mittels welchem verhinderbar ist, dass das zumindest eine Element wenigstens eine Grenze des Arbeitsbereichs überschreitet. Weitere Aspekte der Erfindung betreffen ein Verfahren zum Betreiben einer solchen Anordnung.

Um zu verhindern, dass Bewegungsautomaten bei deren Betrieb einen vorgegebenen Arbeitsbereich überschreiten ist es bekannt, den Arbeitsbereich mittels feststehender Schutzeinrichtungen, wie beispielsweise Sicherheitszäunen oder Sicherheitsgittern zu begrenzen. Mittels derartiger Sicherheitszäune bzw. Sicherheitsgitter kann eine Zelle um den Bewegungsautomaten gebildet sein, sodass beispielsweise eine Verletzung von sich in der Nähe des Arbeitsbereichs aufhaltenden Personen wirksam unterbunden werden kann. Bei Systemen mit bereichsweise gegenüber der Umgebung offenem Arbeitsbereich werden häufig Schutzeinrichtungen wie Lichtschranken, Lichtgitter oder Trittschutzmatten, verwendet, um ein Auftreten von Personenschäden zu vermeiden. Sobald Personen im Arbeitsbereich detektiert werden, erfolgt ein möglichst schnelles Anhalten des Bewegungsautomaten.

Die Offenlegungsschrift DE 10 2006 044 071 A1 zeigt einen Roboter und eine Roboter-Schutzeinrichtung. Der Roboter weist mindestens eine in einem Raum bewegbare Manipulatoreinrichtung auf. Die Manipulatoreinrichtung ist zumindest teilweise von einer Schutzeinrichtung umgeben. Zur Anpassung an unterschiedliche Arbeitsbedingungen und/oder zur Dämpfung eines unvorhergesehenen harten Aufpralls ist das Volumen der Schutzeinrichtung veränderbar. Dies erfolgt vorzugsweise durch eine Fluidzu- oder -abfuhr zu einem Hohlraum der Schutzeinrichtung.

Die Offenlegungsschrift DE 10 2007 037 078 A1 beschreibt ein Verfahren zur Einhaltung von Arbeitsraumgrenzen eines Arbeitsmittels eines Roboters. Ausgehend von einer ersten momentanen Pose des Arbeitsmittels wird eine um einen Zeitabschnitt vorauseilende zweite Pose des Arbeitsmittels aus einem Roboterbewegungsablauf bestimmt. Mindestens eine Anhaltebewegung des Arbeitsmittels wird basierend auf eine Bremseinleitung aus der zweiten Pose bestimmt. Eine Grenzzone für einen Arbeitsraum wird definiert. Ein Eindringen einer Raumkontur des Arbeitsmittels in die Grenzzone wird für die Anhaltebewegung des Arbeitsmittels geprüft. Beim Eindringen mindestens eines Punktes der Raumkontur des Arbeitsmittels in die Grenzzone wird ein Stillsetzen des Roboters veranlasst.

Aufgabe der vorliegenden Erfindung ist es, eine Anordnung und ein Verfahren zum Betreiben einer derartigen Anordnung zu schaffen, mittels welchen einem Überschreiten der Grenze des Arbeitsbereichs besonders frühzeitig entgegengewirkt werden kann.

Diese Aufgabe wird erfindungsgemäß gelöst durch eine Anordnung mit den Merkmalen des Patentanspruchs 1 und durch ein Verfahren mit den Merkmalen des Patentanspruchs 9. Vorteilhafte Ausführungsformen mit zweckmäßigen Weiterbildungen der Erfindung sind Gegenstand der Unteransprüche. Die Ausführungen zu einem der Aspekte der Erfindung, insbesondere zu einzelnen Merkmalen dieses Aspektes, gelten entsprechend auch analog für die anderen Aspekte der Erfindung und umgekehrt.

Die Erfindung betrifft eine Anordnung, mit einem Bewegungsautomaten, welcher zumindest ein bewegbares Element umfasst, mit einer Begrenzungseinrichtung zum Begrenzen eines Arbeitsbereichs des Bewegungsautomaten, wobei die Begrenzungseinrichtung wenigstens ein Begrenzungselement umfasst, mittels welchem verhinderbar ist, dass das zumindest eine Element wenigstens eine Grenze des Arbeitsbereichs überschreitet.

Mit anderen Worten kann mittels des Begrenzungselements verhindert werden, dass das zumindest eine bewegbare Element die wenigstens eine Bereichsgrenze des Arbeitsbereichs, beispielsweise infolge einer Fehlfunktion des Bewegungsautomaten oder infolge einer manuellen Bedienung des Bewegungsautomaten, überschreitet.

Das zumindest eine bewegbare Element kann translatorisch und zusätzlich oder alternativ rotatorisch bewegbar sein. Der Bewegungsautomat kann dazu ausgebildet sein, Bewegungen beispielsweise in Abhängigkeit von einem vorgegebenen Bewegungsmuster automatisch auszuführen. Hierbei kann auch das zumindest eine bewegbare Element in Abhängigkeit von dem vorgegebenen Bewegungsmuster bewegt werden. Derartige Bewegungsmuster können beispielsweise im Rahmen von mittels des Bewegungsautomaten durchzuführenden Kommissionierungsschritten oder Sortierschritten vorgegeben werden, um nur einige Beispiele zu nennen.

Um einem Überschreiten der Grenze des Arbeitsbereichs besonders frühzeitig entgegenzuwirken, ist es erfindungsgemäß vorgesehen, dass die Begrenzungseinrichtung eine Bewegungsvorrichtung umfasst, welche dazu ausgebildet ist, das wenigstens eine Begrenzungselement in Abhängigkeit von wenigstens einer Bewegung des zumindest einen bewegbaren Elements derart zu bewegen, dass das wenigstens eine Begrenzungselement ein Überschreiten der wenigstens einen Grenze durch das zumindest eine bewegbare Element verhindert. Durch ein derartiges Bewegen des Begrenzungselements kann das bewegbare Element mittels des Begrenzungselements frühzeitig aufgehalten, also verzögert (gebremst) werden, bevor das zumindest eine bewegbare Element die wenigstens eine Grenze des Arbeitsbereichs überschreitet.

Das wenigstens eine Begrenzungselement und das zumindest eine bewegbare Element sind vorzugsweise in dieselbe Bewegungsrichtung und zusätzlich oder alternativ in mehrere, identische Bewegungsrichtungen bewegbar. Die Bewegungsvorrichtung kann zudem bevorzugt dazu ausgebildet sein, das wenigstens eine Begrenzungselement im Vergleich zum zumindest einen bewegbaren Element des Bewegungsautomaten mit einer geringeren Bewegungsgeschwindigkeit und zusätzlich oder alternativ mit einer geringeren Beschleunigung zu bewegen. Das Überschreiten der wenigstens einen Grenze kann dann in vorteilhafter Weise dadurch verhindert werden, dass das wenigstens eine Begrenzungselement von dem zumindest einen bewegbaren Element eingeholt wird, bis es schließlich zu einem Kontakt zwischen dem wenigstens einen Begrenzungselement und dem zumindest einen bewegbaren Element kommt. Bei diesem Kontakt kann im Gegensatz zu aus dem Stand der Technik bekannten, feststehenden Schutzeinrichtungen (Sicherheitszäunen, Sicherheitsgittern, etc.) nicht nur ein frühzeitiges sondern auch ein besonders schonendes Abbremsen des zumindest einen bewegbaren Elements erfolgen.

Der Erfindung liegt die Erkenntnis zugrunde, dass insbesondere bei einem hochdynamischen Bewegungsautomaten besonders hohe Bewegungsgeschwindigkeiten und zusätzlich oder alternativ besonders hohe Beschleunigungen des zumindest einen bewegbaren Elements auftreten, wobei es erhebliche Schwierigkeiten bereiten kann, ein rechtzeitiges Stoppen des zumindest einen bewegbaren Elements vor dessen Überschreiten der wenigstens einen Grenze des Arbeitsbereichs zu bewirken. Bei konventionellen, feststehenden Schutzeinrichtungen (Sicherheitszäune, Sicherheitsgitter) kann es bei einer Fehlfunktion des Bewegungsautomaten zu einem ungebremsten Aufprall des zumindest einen bewegbaren Elements mit hoher Bewegungsgeschwindigkeit auf die feststehende Schutzeinrichtung kommen, wodurch erhebliche Schäden entstehen können. Durch die vorliegende Anordnung kann ein derartiger, ungebremster Aufprall wirksam und frühzeitig unterbunden werden.

In einer vorteilhaften Weiterbildung der Erfindung erstreckt sich das wenigstens eine Begrenzungselement zumindest in einer Erstreckungsrichtung des Arbeitsbereichs über diesen. Hierunter ist insbesondere zu verstehen, dass sich das Begrenzungselement in der Erstreckungsrichtung vollständig über den Arbeitsbereich erstreckt. Dies ist von Vorteil, da durch eine derart weit reichende Erstreckung des Begrenzungselements einem Überschreiten der Grenze des Arbeitsbereichs besonders frühzeitig und aufwandsarm entgegengewirkt werden kann. Von besonderem Vorteil ist hierbei, dass auf eine Bewegung des Begrenzungselements in dieser Erstreckungsrichtung verzichtet werden kann um dem Überschreiten der Grenze des Arbeitsbereichs entgegenzuwirken. Das Begrenzungselement kann beispielsweise balkenförmig und damit besonders einfach ausgestaltet sein.

In einer weiteren vorteilhaften Weiterbildung der Erfindung umschließt das wenigstens eine Begrenzungselement das zumindest eine Element wenigstens bereichsweise. Dies ist von Vorteil, da hierdurch einem Überschreiten der Grenze des Arbeitsbereichs unter besonders geringem Bewegungsaufwand des Begrenzungselements entgegengewirkt werden kann.

Das Begrenzungselement kann bevorzugt einen geschlossenen Querschnitt aufweisen. Durch den geschlossenen Querschnitt kann das Begrenzungselement besonders aufwandsarm verhindern, dass das Element des Bewegungsautomaten die Grenze des Arbeitsbereichs zumindest in einer Querschnittsebene des geschlossenen Querschnitts überschreitet.

Bevorzugt kann das Begrenzungselement einen vieleckigen Querschnitt oder einen Rundquerschnitt aufweisen, wodurch ein besonders einfaches umschließen des Elements ermöglicht ist.

In einer weiteren vorteilhaften Weiterbildung der Erfindung weist der Bewegungsautomat eine im Vergleich zu der Begrenzungseinrichtung größere Dynamik auf. Dies ist von Vorteil, da dementsprechend die Begrenzungseinrichtung eine größere dynamische Trägheit als der Bewegungsautomat aufweist, wodurch die Begrenzungseinrichtung einfacher geregelt und gesteuert werden kann, als der Bewegungsautomat. Von besonderem Vorteil ist hierbei, dass die Begrenzungseinrichtung hierdurch einfacher als der Bewegungsautomat durch eine Sicherheitssteuerung überwacht werden kann.

Der Bewegungsautomat kann dementsprechend eine größere Maximalbeschleunigung und zusätzlich oder alternativ eine größere Maximalgeschwindigkeit als die Begrenzungseinrichtung aufweisen. Mit anderen Worten kann der Bewegungsautomat beispielsweise eine Stellvorrichtung umfassen, welche dazu in der Lage ist, das Element schneller zu bewegen und zusätzlich oder alternativ stärker zu beschleunigen als dies beim Bewegen des Begrenzungselements möglich ist.

In einer weiteren vorteilhaften Weiterbildung der Erfindung ist der Bewegungsautomat als mehrachsiger Roboter, insbesondere als Delta-Picker, ausgebildet. Dies ist von Vorteil, da hierdurch besonders viele Freiheitsgrade bei der Bewegung des zumindest einen Elements bestehen. Unter dem Begriff "mehrachsiger Roboter" ist dabei insbesondere ein mit mehreren Bewegungsachsen versehener Roboter zu verstehen. Der Bewegungsautomat kann dementsprechend als mehrgliedriger Roboter ausgebildet sein, wobei das zumindest eine Element einem Glied des Roboters oder einem Werkzeug entsprechen kann.

Das zumindest eine Element kann vorzugsweise und allgemein ein freies Ende des Bewegungsautomaten bilden. Wird das als freies Ende des Bewegungsautomaten ausgebildete, zumindest eine Element durch das wenigstens eine Begrenzungselement vor einem Überschreiten der wenigstens einen Grenze des Arbeitsbereichs gehindert, so können dadurch auch mit dem Element verbundene, beispielsweise als jeweilige Gelenke ausgebildete, weitere bewegbare Elemente, beispielsweise weitere Glieder, des Bewegungsautomaten mittels des wenigstens einen Begrenzungselements von dem Überschreiten der Grenze des Arbeitsbereichs abgehalten werden.

In einer weiteren vorteilhaften Weiterbildung der Erfindung ist die Begrenzungseinrichtung als mehrgliedriger Begrenzungsroboter, insbesondere als SCARA-Roboter, ausgebildet. Dies ist von Vorteil, da aufgrund der unterschiedlichen Glieder des Begrenzungsroboters ein Überschreiten der Grenze des Arbeitsbereichs in mehreren Bewegungsrichtungen unterbunden werden kann. Unter dem Begriff "Begrenzungsroboter" ist dabei zu verstehen, dass die Begrenzungseinrichtung als Roboter ausgebildet sein kann, mittels welchem die wenigstens eine Bewegung des zumindest einen Elements des Bewegungsautomaten begrenzbar ist.

Die Begrenzungseinrichtung kann vorzugsweise auch als SCARA-Roboter (SCARA = Selective Compliance Assembly Robot Arm) ausgebildet sein. Ein derartiger Roboter ist in dessen Bewegung in vorteilhafter Weise einem menschlichen Arm nachempfunden.

In einer weiteren vorteilhaften Weiterbildung der Erfindung bildet das wenigstens eine Begrenzungselement ein freies Ende des Begrenzungsroboters. Dies ist von Vorteil, da hierdurch sämtliche Bewegungsfreiheitsgrade des Begrenzungsroboters zum Begrenzen der Bewegung des zumindest einen Elements des Bewegungsautomaten genutzt werden können.

In einer weiteren vorteilhaften Weiterbildung der Erfindung ist die Begrenzungseinrichtung als Linearportal ausgebildet. Dies ist von Vorteil, da die Begrenzungseinrichtung dadurch einen besonders einfachen Aufbau aufweisen kann und das Überschreiten der wenigstens einen Grenze des Arbeitsbereichs durch einfache Linearbewegungen des wenigstens einen Begrenzungselements unterbunden werden kann. Das Begrenzungselement kann dabei beispielsweise als translatorisch bewegbarer Balken der Begrenzungseinrichtung ausgebildet sein.

Ein weiterer Aspekt der Erfindung betrifft ein Verfahren zum Betreiben einer Anordnung gemäß dem ersten Aspekt der Erfindung, umfassend zumindest die Schritte:
a) Bewegen des zumindest einen Elements; und
b) Bewegen des wenigstens einen Begrenzungselements in Abhängigkeit von dem Bewegen des zumindest einen Elements, sodass mittels des wenigstens einen Begrenzungselements verhindert wird, dass die wenigstens eine Grenze durch das zumindest eine Element überschritten wird. Durch das Bewegen des wenigstens einen Begrenzungselements in Abhängigkeit von dem Bewegen des zumindest einen Elements kann in vorteilhafter Weise verhindert werden, dass es zu einem Überschreiten der wenigstens einen Grenze des Arbeitsbereichs durch das zumindest eine bewegbare Element kommt. Somit kann beim Betreiben der Anordnung ein sicheres Überwachen des Bewegungsautomaten erfolgen und einem Überschreiten der wenigstens einen Grenze des Arbeitsbereichs besonders frühzeitig entgegengewirkt werden.

Dies ermöglicht es beispielsweise den Bewegungsautomaten beim Betreiben der Anordnung auf besonders sichere Weise einzurichten, also mit anderen Worten ein Einrichten des Bewegungsautomaten vorzunehmen. Bei diesem Einrichten kann das zumindest eine bewegbare Element durch manuelle Bedienung des Bewegungsautomaten zu verschiedenen Punkten eines Bewegungsmusters bewegt werden, um beispielsweise einen Montageablauf, Kommissionierungsschritte oder Sortierschritte einzulernen, um nur einige Beispiele zu nennen.

In einer vorteilhaften Weiterbildung der Erfindung erfolgt das Bewegen des wenigstens einen Begrenzungselements in Schritt b) unter Verringerung eines Sicherheitsabstandes zwischen dem wenigstens einen Begrenzungselement und dem zumindest einen Element. Dies ist von Vorteil, da durch den Sicherheitsabstand zwischen dem Begrenzungselement und dem Element auf besonders einfache Art und Weise ein ungestörtes Beschleunigen des zumindest einen Elements aus dem Stillstand ermöglicht ist, ohne dass es hierbei bereits zu einem Kontakt zwischen dem Element und dem Begrenzungselement kommt. Dadurch können einzelne Arbeitsschritte unter Verwendung des Elements besonders schnell und ungehindert durchgeführt werden.

In einer weiteren vorteilhaften Weiterbildung der Erfindung übt das wenigstens eine Begrenzungselement eine Rückhaltekraft auf das zumindest eine Element aus, wenn dieses die wenigstens eine Grenze des Arbeitsbereichs erreicht, um zu verhindern, dass die wenigstens eine Grenze durch das zumindest eine Element überschritten wird. Dies ist von Vorteil, da über die Rückhaltekraft ein besonders schnelles Abbremsen des zumindest einen Elements erfolgen kann. Die Rückhaltekraft kann beispielsweise ausgeübt werden, indem das Begrenzungselement mit dem Element kontaktiert wird, sobald das Element die Grenze des Arbeitsbereichs erreicht.

In einer weiteren vorteilhaften Weiterbildung der Erfindung wird das wenigstens eine Begrenzungselement bei dessen Bewegen in Schritt b) in Abhängigkeit von einer Bewegungsrichtung des zumindest einen Elements derart ausgerichtet, dass sich zumindest ein Teilbereich des Begrenzungselements in der Bewegungsrichtung zwischen dem zumindest einen Element und der wenigstens einen Grenze befindet. Dies ist von Vorteil, da hierdurch zuverlässig ein Blockieren der Bewegung des Elements mittels des Begrenzungselements ermöglicht ist. So kann beispielsweise bei einer Fehlfunktion des Bewegungsautomaten eine die Bewegung des Elements abbremsende Kollision mit dem Begrenzungselement bewirkt werden.

In einer weiteren vorteilhaften Weiterbildung der Erfindung erfolgt das Bewegen des wenigstens einen Begrenzungselements mit einer geringeren Maximalgeschwindigkeit und/oder mit einer geringeren Maximalbeschleunigung, als das Bewegen des zumindest einen Elements. Dies ist von Vorteil, da das Begrenzungselement somit mit einer größeren Trägheit bewegt wird als das Element des Bewegungsautomaten. Aufgrund der geringeren Maximalgeschwindigkeit und zusätzlich oder alternativ der geringeren Maximalbeschleunigung ist das Begrenzungselement einfacher zu überwachen als das Element des Bewegungsautomaten.

In einer weiteren vorteilhaften Weiterbildung der Erfindung wird durch das Bewegen des wenigstens einen Begrenzungselements eine Kollision zwischen einem in dem Arbeitsbereich befindlichen Fremdobjekt und dem zumindest einen Element verhindert. Dies ist von Vorteil, da somit auf das Eindringen von Fremdobjekten beispielsweise von Personen, in den Arbeitsbereich reagiert werden kann. Ein besonderer Vorteil hierbei ist, dass der Arbeitsbereich - anders als bei aus dem Stand der Technik bekannten feststehenden Schutzeinrichtungen - für Personen zugänglich und insbesondere an der wenigstens einen Grenze gegenüber der Umgebung offen sein kann. Dadurch kann sich beispielsweise eine Person in den Arbeitsbereich bewegen ohne dass hierfür beispielsweise zuerst eine Tür eines Sicherheitsgitters oder eines Sicherheitszauns geöffnet werden muss.

Hierzu kann die Anordnung wenigstens einen Sensor umfassen, mittels welchem das Fremdobjekt in dem Arbeitsbereich detektierbar ist. In Abhängigkeit von jeweiligen Sensordaten des Sensors kann die Bewegungsvorrichtung das Begrenzungselement derart bewegen, dass durch das Begrenzungselement die Kollision zwischen dem Fremdobjekt und dem Element verhindert wird.

Die vorliegende Erfindung wird nun anhand der beigefügten Zeichnungen näher erläutert, in denen zeigen:
- FIG 1: eine Perspektivansicht einer Anordnung mit einem Bewegungsautomaten und einer Begrenzungseinrichtung;
- FIG 2: eine Perspektivansicht einer weiteren Ausführungsform der Anordnung; und
- FIG 3: ein Ablaufdiagramm eines Verfahrens zum Betreiben der Anordnung.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen realisiert werden können. Insbesondere können auch Kombinationen mit den eingangs erwähnten Merkmalen aus dem Stand der Technik erfolgen.

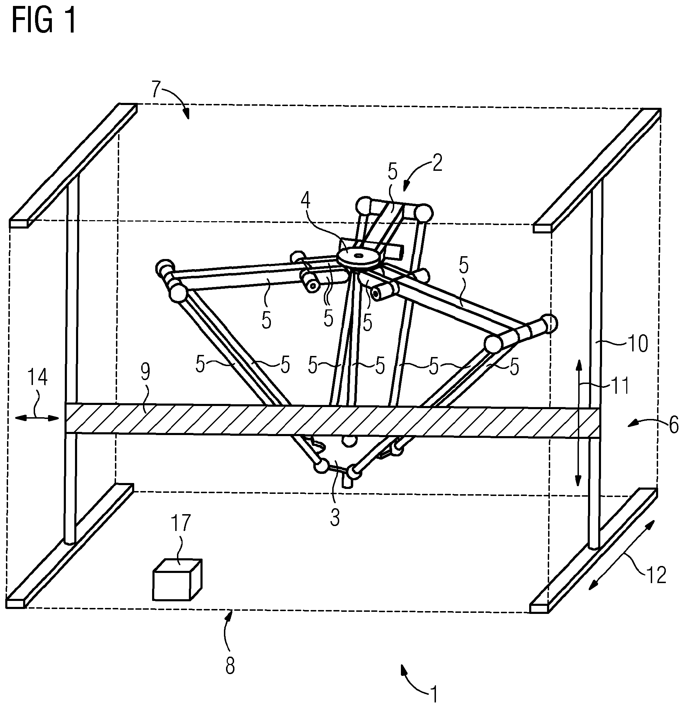

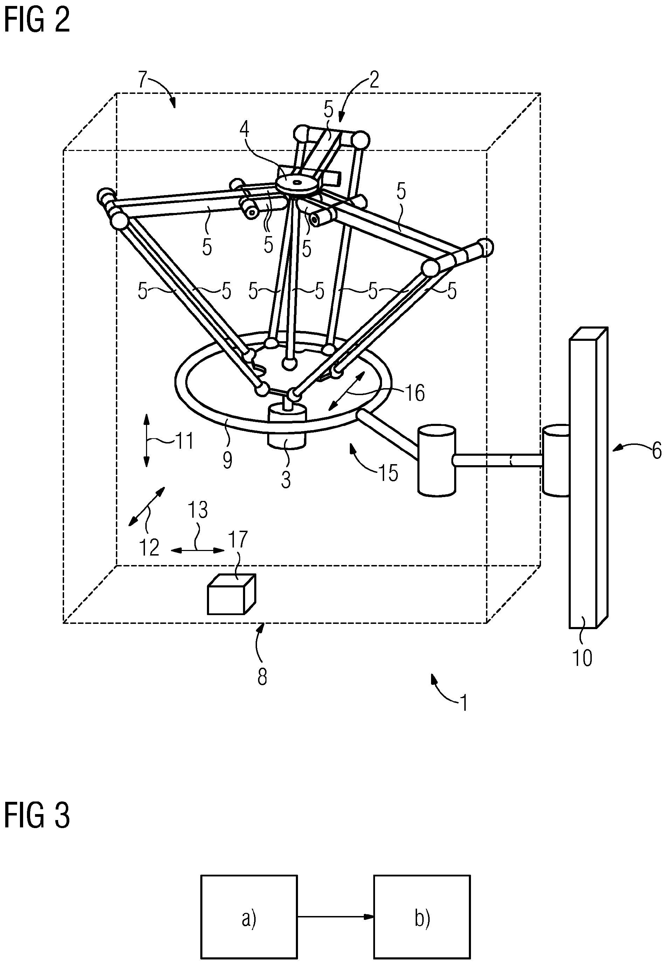

FIG 1 und FIG 2 zeigen jeweils eine Anordnung 1, mit einem Bewegungsautomaten 2 sowie mit einer Begrenzungseinrichtung 6 zum Begrenzen eines Arbeitsbereichs 7 des Bewegungsautomaten 2. Der Arbeitsbereich 7 ist in FIG 1 und FIG 2 lediglich exemplarisch quaderförmig ausgebildet, kann also auch eine andere Kontur aufweisen.

Der Bewegungsautomat 2 ist vorliegend als Delta-Picker und damit als mehrachsiger Roboter ausgebildet und weist eine im Vergleich zu der Begrenzungseinrichtung 6 größere Dynamik auf.

Die Begrenzungseinrichtung 6 ist in der in FIG 1 gezeigten Ausführungsformen als Linearportal ausgebildet.

In der in FIG 2 gezeigten Ausführungsformen ist die Begrenzungseinrichtung 6 als SCARA-Roboter, also als mehrgliedriger Roboter ausgebildet.

Der Bewegungsautomat 2 umfasst vorliegend ein bewegbares Element 3, eine Mehrzahl an Gliedern 5, über welche das bewegbare Element 3 unterschiedlichen Bewegungen 11, 12, 13 in jeweils unterschiedlichen Bewegungsrichtungen unterworfen werden kann und eine Basis 4, über welche der Bewegungsautomat 2 bewegbar beispielsweise an einer hier nicht weiter dargestellten Raumdecke gelagert sein kann. Das bewegbare Element 3 ist vorliegend als Werkzeug, beispielsweise als Greifwerkzeug, ausgebildet. Die Bewegungen 11, 12, 13 sind vorliegend durch jeweilige Doppelpfeile kenntlich gemacht, wobei die Doppelpfeile eine bidirektionale Bewegbarkeit verdeutlichen. Die jeweiligen Doppelpfeile können entlang jeweiliger Koordinatenachsen eines hier nicht weiter dargestellten beispielsweise auf die Begrenzungseinrichtung 6 bezogenen, kartesischen Koordinatensystems orientiert sein.

Die Bewegungen 11, 12, 13 sind in FIG 1 und FIG 2 durch jeweilige Doppelpfeile verdeutlicht. Dabei ist klar, dass das bewegbare Element 3 den Bewegungen 11, 12, 13 auch gleichzeitig unterworfen werden kann, sodass das bewegbare Element 3 beispielsweise entlang einzelner Punkte eines beispielsweise bogenförmigen oder kreisförmigen Bewegungsmusters bewegt werden kann.

Die Begrenzungseinrichtung 6 ist zum Begrenzen des Arbeitsbereichs 7 des Bewegungsautomaten 2 vorgesehen, wobei die Begrenzungseinrichtung 6 vorliegend ein Begrenzungselement 9 umfasst, mittels welchem verhinderbar ist, dass das Element 3 eine Grenze 8 oder mehrere Grenzen 8 des Arbeitsbereichs 7 überschreitet. Die Grenze 8 kann beispielsweise einer Seitenfläche des in FIG 1 und FIG 2 dargestellten, quaderförmigen Arbeitsbereichs 7 entsprechen.

Die Begrenzungseinrichtung 6 kann auch dazu ausgebildet sein sämtlicher Grenzen 8 des Arbeitsbereichs 7 gegenüber einem Überschreiten des Elements 3 abzusichern.

Die Begrenzungseinrichtung 6 umfasst allgemein eine Bewegungsvorrichtung 10, welche dazu ausgebildet ist, das Begrenzungselement 9 in Abhängigkeit von den jeweiligen Bewegungen 11, 12, 13 des Elements 3 derart zu bewegen, dass das Begrenzungselement 9 ein Überschreiten der Grenze 8 durch das Element 3 verhindert.

Das Begrenzungselement 9 ist in FIG 1 balkenförmig ausgebildet und erstreckt sich in einer Erstreckungsrichtung 14 des Arbeitsbereichs 7 vollständig über den Arbeitsbereich 7.

In FIG 2 weist das Begrenzungselement 9 einen geschlossenen Querschnitt auf. Der geschlossene Querschnitt des Begrenzungselements 9 ist in FIG 2 als Ringquerschnitt und damit als Rundquerschnitt ausgebildet. Dadurch umschließt das Begrenzungselement 9 das Element 3 vollständig, wie in FIG 2 erkennbar ist.

In der in FIG 2 gezeigten Ausführungsform bildet das Begrenzungselement 9 ein freies Ende 15 der in dieser Ausführungsform als Begrenzungsroboter ausgebildeten Begrenzungseinrichtung 6.

Bei einem Verfahren zum Betreiben der Anordnung 1 werden zumindest die folgenden Schritte a), b) durchgeführt, welche in FIG 3 schematisch verdeutlicht sind.

In Schritt a) erfolgt ein Bewegen des Elements 3.

In Schritt b) erfolgt ein Bewegen des Begrenzungselements 9 in Abhängigkeit von dem Bewegen des Elements 3, sodass mittels des Begrenzungselements 9 verhindert wird, dass die Grenze 8 durch das Element 3 überschritten wird.

Zudem erfolgt das Bewegen des Begrenzungselements 9 in Schritt b) unter Verringerung eines Sicherheitsabstandes 16 zwischen dem Begrenzungselement 9 und dem Element 3. Der Sicherheitsabstand 16 ist vorliegend in FIG 2 durch einen Doppelpfeil verdeutlicht. Lediglich aus Gründen der Übersichtlichkeit ist der Sicherheitsabstand 16 in FIG 1 nicht dargestellt.

Das Begrenzungselement 9 übt eine Rückhaltekraft auf das Element 3 aus, wenn dieses die Grenze 8 des Arbeitsbereichs 7 erreicht. In diesem Fall ist der Sicherheitsabstand 16 zwischen dem Begrenzungselement 9 und dem Element 3 auf den Wert "0" reduziert und das Begrenzungselement 9 liegt dementsprechend an dem Element 3 an. Dadurch wird verhindert, dass die Grenze 8 durch das Element 3 überschritten wird.

Das Begrenzungselement 9 wird bei dessen Bewegen in Schritt b) in Abhängigkeit von einer Bewegungsrichtung des Elements 3 derart ausgerichtet, dass sich zumindest ein Teilbereich des Begrenzungselements 9 in der Bewegungsrichtung zwischen dem Element 3 und der Grenze 8 befindet.

Das Bewegen des Begrenzungselements 9 erfolgt vorliegend mit einer geringeren Maximalgeschwindigkeit und zusätzlich mit einer geringeren Maximalbeschleunigung, als das Bewegen des Elements 3.

Durch das Bewegen des Begrenzungselements 9 wird zudem eine Kollision zwischen einem in dem Arbeitsbereich 7 befindlichen Fremdobjekt 17 und dem Element 3 verhindert. Das Fremdobjekt 17 ist vorliegend lediglich schematisch in FIG 1 und FIG 2 angedeutet. Bei dem Fremdobjekt 17 kann es sich beispielsweise um eine Person handeln, welche sich in dem Arbeitsbereich 7 aufhält.

Die vorliegende Anordnung 1 ermöglicht eine zuverlässige Überwachung des Delta-Pickers 2 (Bewegungsautomat) obwohl dieser ein besonders hohes Beschleunigungsvermögen aufweist.

Im Falle einer Gefahr bringenden Situation, bei welcher ein Überschreiten der wenigstens einen Grenze 8 des Arbeitsbereichs 7 droht, kann ein rechtzeitiges, insbesondere frühzeitiges Stoppen des Elements 3 des Delta-Pickers 2 bewirkt werden, ohne dass sicherheitsrelevante Grenzwerte überschritten werden.

Dadurch ist es ermöglicht, den Bewegungsautomaten 2 beispielsweise besonders einfach einzurichten und dabei manuell einzelne Punkte des Bewegungsmusters anzufahren um dem Bewegungsautomaten 2 dadurch das Bewegungsmuster vorzugeben.

Ein besonderer Vorteil besteht darin, dass durch die Begrenzungseinrichtung 6 darauf verzichtet werden kann, den Bewegungsautomaten 2 in einer räumlich von einer Bedienperson abgetrennten Zelle zu bewegen.

Unabhängig davon, ob die Begrenzungseinrichtung 6 als im Vergleich zum Bewegungsautomaten 2 weniger dynamisches, kartesisches Linearportal (siehe FIG 1), also als Linear-Achs-System oder stattdessen als SCARA-Roboter (siehe FIG 2) ausgebildet ist, kann durch die Verwendung der Begrenzungseinrichtung 6 eine sichere Steuerung sowie ein sicheres Betreiben des Bewegungsautomaten 2 gewährleistet werden.

Im Falle der in FIG 1 dargestellten Ausführungsform kann zumindest das beispielsweise balkenförmige Begrenzungselement 9 des Linearportals 6 (Linear-Achs-System) in dem Arbeitsbereich 7 angeordnet sein, um zu verhindern, dass das Element 3 die zumindest eine Grenze 8 überschreitet.

Das Linear-Achs-System kann bezüglich seiner kartesischen Geschwindigkeit und Position durch eine Sicherheitssteuerung überwacht werden. Durch die Bewegung des Begrenzungselements 9 kann der Arbeitsbereich 7 derart adaptiert werden, dass beispielsweise eine Bedienperson (Fremdobjekt 17) während des Einrichtens des Bewegungsautomaten 2 näher an den Bewegungsautomaten 2 herantreten kann.

Für einen Automatikbetrieb, in welchem der Bewegungsautomat 2 nach erfolgtem Einrichten betrieben werden kann, und in welchem die Absicherung des Bewegungsautomaten durch aus dem Stand der Technik bekannte Schutzeinrichtungen erfolgen kann, kann das Begrenzungselement 9 auch entfernt werden, sodass eine besonders ungehinderte Bewegung des Elements 3 innerhalb des Arbeitsbereichs 7 ermöglicht ist.

Das Begrenzungselement 9 stellt allgemein eine bewegbare, mechanische Begrenzung für das bewegbare Element 3 und damit für den Bewegungsautomaten 2 dar, welche ein Ausbrechen zumindest des Elements 3 aus dem Arbeitsbereich 7 verhindert.

## Patentansprüche

1. Anordnung (1),
- mit einem Bewegungsautomaten (2), welcher zumindest ein bewegbares Element (3) umfasst,
- mit einer Begrenzungseinrichtung (6) zum Begrenzen eines Arbeitsbereichs (7) des Bewegungsautomaten (2), wobei
- die Begrenzungseinrichtung (6) wenigstens ein Begrenzungselement (9) umfasst, mittels welchem verhinderbar ist, dass das zumindest eine Element (3) wenigstens eine Grenze (8) des Arbeitsbereichs (7) überschreitet,
**dadurch gekennzeichnet, dass**
- die Begrenzungseinrichtung (6) eine Bewegungsvorrichtung (10) umfasst, welche dazu ausgebildet ist,
- das wenigstens eine Begrenzungselement (9) in Abhängigkeit von wenigstens einer Bewegung (11, 12, 13) des zumindest einen bewegbaren Elements (3) derart zu bewegen, dass das wenigstens eine Begrenzungselement (9) ein Überschreiten der wenigstens einen Grenze (8) durch das zumindest eine bewegbare Element (3) verhindert.

2. Anordnung (1) nach Anspruch 1, **dadurch gekennzeichnet, dass** sich das wenigstens eine Begrenzungselement (9) zumindest in einer Erstreckungsrichtung (14) des Arbeitsbereichs (7) über diesen erstreckt.

3. Anordnung (1) nach Anspruch 1 oder 2, **dadurch gekennzeichnet, dass** das wenigstens eine Begrenzungselement (9) das zumindest eine Element (3) wenigstens bereichsweise umschließt.

4. Anordnung (1) nach einem der vorhergehenden Ansprüche, **dadurch gekennzeichnet, dass** die Begrenzungseinrichtung (6) eine im Vergleich zu dem Bewegungsautomat (2) größere Trägheit aufweist.

5. Anordnung (1) nach einem der vorhergehenden Ansprüche, **dadurch gekennzeichnet, dass** der Bewegungsautomat (2) als mehrachsiger Roboter, insbesondere als Delta-Picker, ausgebildet ist.

6. Anordnung (1) nach einem der vorhergehenden Ansprüche, **dadurch gekennzeichnet, dass** die Begrenzungseinrichtung (6) als mehrgliedriger Begrenzungsroboter, insbesondere als SCARA-Roboter, ausgebildet ist, wobei mittels des Begrenzungsroboters die wenigstens eine Bewegung (11, 12, 13) des zumindest einen Elements (3) des Bewegungsautomaten (2) begrenzbar ist.

7. Anordnung (1) nach Anspruch 6, **dadurch gekennzeichnet, dass** das wenigstens eine Begrenzungselement (9) ein freies Ende (15) des Begrenzungsroboters bildet.

8. Anordnung (1) nach einem der Ansprüche 1 bis 5, **dadurch gekennzeichnet, dass** die Begrenzungseinrichtung (6) als Linearportal ausgebildet ist.

9. Verfahren zum Betreiben einer Anordnung (1) nach einem der Ansprüche 1 bis 8, umfassend zumindest die Schritte:
a) Bewegen des zumindest einen Elements (3); und
b) Bewegen des wenigstens einen Begrenzungselements (9) in Abhängigkeit von dem Bewegen des zumindest einen Elements (3), sodass mittels des wenigstens einen Begrenzungselements (9) verhindert wird, dass die wenigstens eine Grenze (8) durch das zumindest eine Element (3) überschritten wird.

10. Verfahren nach Anspruch 9, **dadurch gekennzeichnet, dass** zumindest das Bewegen des wenigstens einen Begrenzungselements (9) in Schritt b) unter Verringerung eines Sicherheitsabstandes (16) zwischen dem wenigstens einen Begrenzungselement (9) und dem zumindest einen Element (3) erfolgt.

11. Verfahren nach Anspruch 9 oder 10, **dadurch gekennzeichnet, dass** das wenigstens eine Begrenzungselement (9) eine Rückhaltekraft auf das zumindest eine Element (3) ausübt, wenn dieses die wenigstens eine Grenze (8) des Arbeitsbereichs (7) erreicht, um zu verhindern, dass die wenigstens eine Grenze (8) durch das zumindest eine Element (3) überschritten wird.

12. Verfahren nach einem der Ansprüche 9 bis 11, **dadurch gekennzeichnet, dass**
das wenigstens eine Begrenzungselement (9) bei dessen Bewegen in Schritt b) in Abhängigkeit von einer Bewegungsrichtung des zumindest einen Elements (3) derart ausgerichtet wird, dass sich zumindest ein Teilbereich des Begrenzungselements (9) in der Bewegungsrichtung zwischen dem zumindest einen Element (3) und der wenigstens einen Grenze (8) befindet.

13. Verfahren nach einem der Ansprüche 9 bis 12, **dadurch gekennzeichnet, dass** das Bewegen des wenigstens einen Begrenzungselements (9) mit einer geringeren Maximalgeschwindigkeit und/oder mit einer geringeren Maximalbeschleunigung erfolgt, als das Bewegen des zumindest einen Elements (3).

## Claims

1. Arrangement (1)
- comprising an automatic movement machine (2) which comprises at least one movable element (3),
- comprising a delimiting device (6) for delimiting a working region (7) of the automatic movement machine (2), wherein
- the delimiting device (6) comprises at least one delimiting element (9) by means of which it is possible to prevent the at least one element (3) from overshooting at least one boundary (8) of the working region (7),
**characterized in that**
- the delimiting device (6) comprises a movement apparatus (10) which is designed
- to move the at least one delimiting element (9) depending on at least one movement (11, 12, 13) of the at least one movable element (3) in such a way that the at least one delimiting element (9) prevents the at least one movable element (3) from overshooting the at least one boundary (8) .

2. Arrangement (1) according to Claim 1, **characterized in that** the at least one delimiting element (9) extends beyond the working region (7) at least in one direction of extent (14) of said working region.

3. Arrangement (1) according to Claim 1 or 2, **characterized in that** the at least one delimiting element (9) surrounds the at least one element (3) at least in regions.

4. Arrangement (1) according to one of the preceding claims, **characterized in that** the delimiting device (6) has greater inertia than the automatic movement machine (2).

5. Arrangement (1) according to one of the preceding claims, **characterized in that** the automatic movement machine (2) is in the form of a multi-axis robot, in particular in the form of a delta picker.

6. Arrangement (1) according to one of the preceding claims, **characterized in that** the delimiting device (6) is in the form of a multi-arm delimiting robot, in particular in the form of a SCARA robot, wherein, by means of the delimiting robot, the at least one movement (11, 12, 13) of the at least one element (3) of the automatic movement machine (2) can be delimited.

7. Arrangement (1) according to Claim 6, **characterized in that** the at least one delimiting element (9) forms a free end (15) of the delimiting robot.

8. Arrangement (1) according to one of Claims 1 to 5, **characterized in that** the delimiting device (6) is in the form of a linear portal.

9. Method for operating an arrangement (1) according to one of Claims 1 to 8, comprising at least the steps of:
a) moving the at least one element (3); and
b) moving the at least one delimiting element (9) depending on the movement of the at least one element (3), so that the at least one delimiting element (9) prevents the at least one element (3) from overshooting the at least one boundary (8).

10. Method according to Claim 9, **characterized in that** at least the movement of the at least one delimiting element (9) in step b) takes place with a reduction in a safety distance (16) between the at least one delimiting element (9) and the at least one element (3).

11. Method according to Claim 9 or 10, **characterized in that** the at least one delimiting element (9) exerts a retention force on the at least one element (3) when said element reaches the at least one boundary (8) of the working region (7) in order to prevent the at least one element (3) from overshooting the at least one boundary (8).

12. Method according to one of Claims 9 to 11, **characterized in that** the at least one delimiting element (9), when it moves in step b) depending on a movement direction of the at least one element (3), is oriented in such a way that at least a subregion of the delimiting element (9) is located between the at least one element (3) and the at least one boundary (8) in the movement direction.

13. Method according to one of Claims 9 to 12, **characterized in that** the movement of the at least one delimiting element (9) takes place at a lower maximum speed and/or with a lower maximum acceleration than the movement of the at least one element (3).

## Revendications

1. Arrangement (1),
- comprenant un automate de déplacement (2) qui comprend au moins un élément mobile (3),
- comprenant un dispositif de limitation (6) destiné à limiter une zone de travail (7) de l'automate de déplacement (2),
- le dispositif de limitation (6) comprenant au moins un élément de limitation (9) qui permet d'empêcher que l'au moins un élément (3) dépasse au moins une limite (8) de la zone de travail (7),
**caractérisé en ce que**
- le dispositif de limitation (6) comprend un dispositif de déplacement (10) qui est conçu pour
- déplacer l'au moins un élément de limitation (9) en fonction d'au moins un mouvement (11, 12, 13) de l'au moins un élément mobile (3) de façon que l'au moins un élément de limitation (9) empêche un dépassement de l'au moins une limite (8) par l'au moins un élément mobile (3) .

2. Arrangement (1) selon la revendication 1, **caractérisé en ce que** l'au moins un élément de limitation (9) s'étend sur la zone de travail (7) au moins dans une direction (14) de l'étendue de cette dernière.

3. Arrangement (1) selon la revendication 1 ou 2, **caractérisé en ce que** l'au moins un élément de limitation (9) entoure, au moins par endroits, l'au moins un élément (3).

4. Arrangement (1) selon l'une des revendications précédentes, **caractérisé en ce que** le dispositif de limitation (6) a une plus grande inertie que l'automate de déplacement (2).

5. Arrangement (1) selon l'une des revendications précédentes, **caractérisé en ce que** l'automate de déplacement (2) est exécuté en tant que robot multi-axes, notamment en tant que préhenseur delta.

6. Arrangement (1) selon l'une des revendications précédentes, **caractérisé en ce que** le dispositif de limitation (6) est exécuté en tant que robot de limitation à plusieurs bras, notamment en tant que robot SCARA, l'au moins un mouvement (11, 12, 13) de l'au moins un élément (3) de l'automate de déplacement (2) pouvant être limité grâce au robot de limitation.

7. Arrangement (1) selon la revendication 6, **caractérisé en ce que** l'au moins un élément de limitation (9) forme une extrémité libre (15) du robot de limitation.

8. Arrangement (1) selon l'une des revendications 1 à 5, **caractérisé en ce que** le dispositif de limitation (6) est exécuté en tant que portique linéaire.

9. Procédé pour faire fonctionner un arrangement (1) selon l'une des revendications 1 à 8, comprenant au moins les étapes :
a) déplacement de l'au moins un élément (3) ; et
b) déplacement de l'au moins un élément de limitation (9) en fonction du déplacement de l'au moins un élément (3) de façon que l'au moins un élément de limitation (9) empêche que l'au moins une limite (8) soit dépassée par l'au moins un élément (3).

10. Procédé selon la revendication 9, **caractérisé en ce qu'**au moins le déplacement de l'au moins un élément de limitation (9) à l'étape b) s'effectue en réduisant une distance de sécurité (16) entre l'au moins un élément de limitation (9) et l'au moins un élément (3).

11. Procédé selon la revendication 9 ou 10, **caractérisé en ce que** l'au moins un élément de limitation (9) exerce une force de retenue sur l'au moins un élément (3) lorsque celui-ci atteint l'au moins une limite (8) de la zone de travail (7) pour empêcher que l'au moins un élément (3) dépasse l'au moins une limite (8).

12. Procédé selon l'une des revendications 9 à 11, **caractérisée en ce que**
lau moins un élément de limitation (9) est positionné, lors de son déplacement dans l'étape b), en fonction d'une direction de déplacement de l'au moins un élément (3), de façon qu'au moins une zone partielle de l'élément de limitation (9) se trouve entre l'au moins un élément (3) et l'au moins une limite (8) dans la direction de déplacement.

13. Procédé selon l'une des revendications 9à 12, **caractérisé en ce que** le déplacement de l'au moins un élément de limitation (9) s'effectue à une vitesse maximale et/ou à une accélération maximale qui sont inférieures à celles du déplacement de l'au moins un élément (3).
